# EUROPEAN PATENT APPLICATION

(11) **EP 1 655 571 A1**
(43) Date of publication of application: **10.05.2006**
(21) Application number: 04026260.2
(22) Date of filing: 05.11.2004
(51) Int. Cl.: G01B 11/06, G11B 7/26

(54) **Device for measuring the thickness of optical media stampers**

(71) Applicant: DaTARIUS Technologies GmbH, 6600 Reutte (AT)
(72) Inventor: Hausberger, Peter, 6240 Radfeld 150 (AT); Pohl, Peter, 6491 Mils bei Imst (AT)
(74) Representative: Torggler, Paul Norbert

(57) **Abstract**

Device for measuring the thickness (d) of optical media stampers comprising a turntable for rotating the stamper, the measuring device comprising
- at least one light source (1, 1') for emitting a light beam, which is directed onto a surface of the stamper (10),
- position sensitive detector means (8, 8') for detecting the location of the light beam reflected from the stamper (10) surface.

## Description

The invention relates to a device for measuring the thickness of optical media stampers comprising a turntable for rotating the stamper.

So-called "stampers", "fathers", "mothers", "sons", or "matrices" (called "stampers" for short in the following) are used for the duplication of optical media (such as compact discs (CDs in short), CD-ROM, CD-XA, CD-I, CD-R, CD-RW and other media based on the CD format, and of digital versatile discs (DVDs in short), DVD-ROM, DVD-R, DVD-R dual layer, DVD-RW, DVD+R, DVD+RW, DVD+R dual layer and other media based on the DVD format, and Blu-ray and HD-DVD media. These matrices are parts made of metal or glass or of plastics, which are produced and duplicated by means of exposure to light, etching, plasma etching, vacuum metallizing, partial evaporation, or electrochemically (galvanically). These and the end-products made from them (optical media, called replicas for short) contain mechanical structures ("pits") which either themselves already represent the information that is to be read out (in the case of the pre-recorded versions of these media, the replicas), or else are guide or synchronization information for a subsequent writing process (in the case of the versions of these media that are writeable once or repeatedly, such as e.g. CD-R or DVD-R).

It is essential that the stampers have a constant thickness (of course apart from the small pit structure on the surface).

For this reason, the prior art already comprises various methods for checking the thickness of stampers. Inductive of capacitive methods are difficult to handle, in particular because the stamper material itself is sometimes inhomogeneous with respect to its electrical properties. This leads to a wrong thickness detection.

Mechanical scanners have the disadvantage of single point measurement only (no full surface scan). Also, mechanical scanners have a high risk to damage the surface, and it is not possible to measure thickness and roughness in parallel.

In order to solve the problems present with prior art devices, the invention suggests a device for measuring the thickness (d) of optical media stampers comprising a turntable for rotating the stamper, the measuring device comprising
- at least one light source (1, 1') for emitting a light beam, which is directed onto a surface of the stamper (10),
- position sensitive detector means (8, 8') for detecting the location of the light beam reflected from the stamper (10) surface.

With such an optical scanning method, the location of the light beam spot on the stamper surface can be exactly determined. If the location of the opposite side of the stamper surface is known, for example by placing the stamper on a plain measuring surface, the thickness of the stamper can be determined.

A preferred embodiment is characterised in that the thickness measuring means comprises at least one light source, means for directing a first light beam onto the first surface of the stamper and a second light beam onto the opposite, second surface of the stamper, under an oblique angle respectively, and further comprising first and second position sensitive detection means, preferably a position sensitive diode, for detecting and locating the reflected first and second light beams, respectively.

With such an embodiment, it is directly possible to measure the thickness of the stamper without placing the stamper on an own surface. The thickness is essentially the difference between the measured laser beam spot location on the upper surface and the measured laser beam spot on the lower surface of the stamper.

The thickness measurement according to the invention can preferably be combined with the measurement of surface properties of the stamper.

Such a surface measurement device can also comprise at least one light source for emitting a light beam, which is directed onto a surface of the stamper. A stray light detector means detects stray light, which is reflected from the stamper surface under angles differing from the direct reflection angle of the incident light beam.

For the purpose of this description, the direct reflexion angle is the angle under which an incident light beam would be reflected according to the laws of geometric optics from a mirror-like surface. Such a mirror-like surface does not produce any stray light. Therefore, the detection of stray light can be taken as a measure for a deviation of the stamper surface from a perfect mirror surface. In other words, this means that roughness and/or scratches can be detected by detecting the stray light.

In order to separate the directly reflected light component (under the direct reflection angle) from the stray light, a dark field method can be used: An optical element is placed within the optical path of the directly reflected light. In principal, it would be possible to just block the directly reflected light in order to detect the stray light. However, according to a preferred embodiment, the direct reflected light can be used in parallel to determine further properties of the surface of the stamper. In this regard, it is possible to direct the directly reflected light onto a position sensitive diode, which makes it possible to determine the skew of the stamper surface at the measuring spot. Also, it is possible to measure the reflectivity of the stamper at this spot by measuring the intensity of the directly reflected light component at the position sensitive diode. For example "a dark spot" not having any structure could be detected by a decrease of intensity.

Usually, the stampers have a pit structure on their surface, wherein the pits have sices in the range of µm and far below. According to the preferred embodiment of this invention, the parameters of the light spot of the incident light beam on the stamper surface are between 0,05 mm and 0,5 mm - preferably about 0,2 mm. This is far above the dimensions of the pit structure and therefore, the pit structure itself is not detected rather an average over the area of the light spot is formed. Usually, the light spot is circular and can be obtained without complicated optics. However - in certain cases - it might be beneficial to use a longitudinally shaped laser spot.

Further, preferred embodiment comprises first components to measure surface properties of the first side of the stamper (upper side) and second components to measure at the same time surface properties of the opposite, second side of the stamper (lower side). With such a device, all relevant surface properties of a stamper can be determined in a single scan, where the stamper itself is rotated on the turntable and moved relative to the measurement heads above and below the stamper in a radial direction.

From each measurement point (light spot on the stamper) on the upper side and on the lower side of the stamper, you can obtain in parallel and at the same time several different parameters: The skew angle of the surface at the measuring spot, the intensity of the directly reflected light, a measurement of the roughness and/or scratches on the surface by determining the stray light, and finally: by measuring the stamper from below and above, the thickness of the stamper of each measuring point can be determined at the same scan.

Further advantages and details of the invention are discussed below.

Fig. 1 shows a part of an embodiment of a device for measuring surface properties of optical media stampers according to the invention (part above the stamper for measuring the upper stamper side).

Fig. 2 shows a side view of the components for measuring the surface roughness of the upper and lower side of the stamper.

Fig. 3 shows a side view of the thickness measurement of the stamper.

Fig. 4 shows a top view on a stamper turntable with a measurement head according to the invention.

Fig. 5 shows a side view of an embodiment of the invention with a linearly displaceable turntable and two measurement heads according to the invention.

Fig. 6 shows a top view on a stamper.

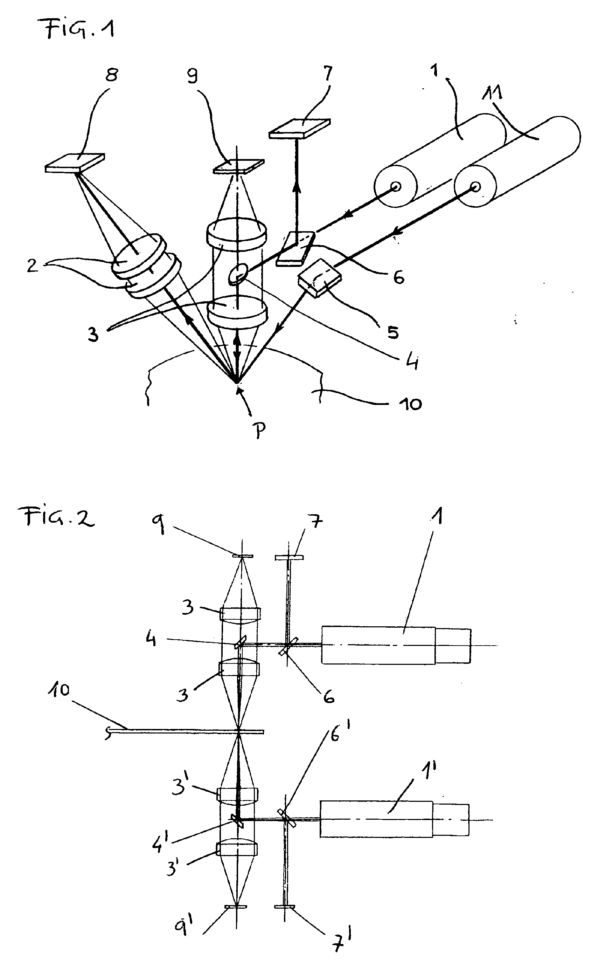

The device for measuring surface properties, in particular the roughness of the optical stamper 10 according to Fig. 1, comprises a turntable (not shown in Fig. 1) for rotating the stamper. The turntable itself may be of any form well known to a person skilled in the art. The measuring device itself comprises a semi-conductor laser as a light source 1. The light beam emitted from that laser light source assembly is directed onto the stamper surface via the beam splitter 6 and the mirror 4.

If the stamper surface has a certain roughness and/or scratches, the light will not be only reflected back at the direct reflection angle of 90°, but also stray light will occur. Such a stray light or scatted light will then be collected by two focus lenses and will be directed on the stray light photodiode detector 9.

The directly reflected light component itself does not reach the stray light detector 9, because the mirror 4 directs this directly reflected light component back to the beam splitter and from there to the position sensitive photodiode, which is able to determine the skew and the reflectivity of the upper side of the stamper at the measuring spot P.

With the components described above, it is at the same time possible to determine the skew or inclination of the upper stamper surface at the measuring point B, the reflectivity of the stamper surface at that point and the roughness and/or scratches by detecting the stray light.

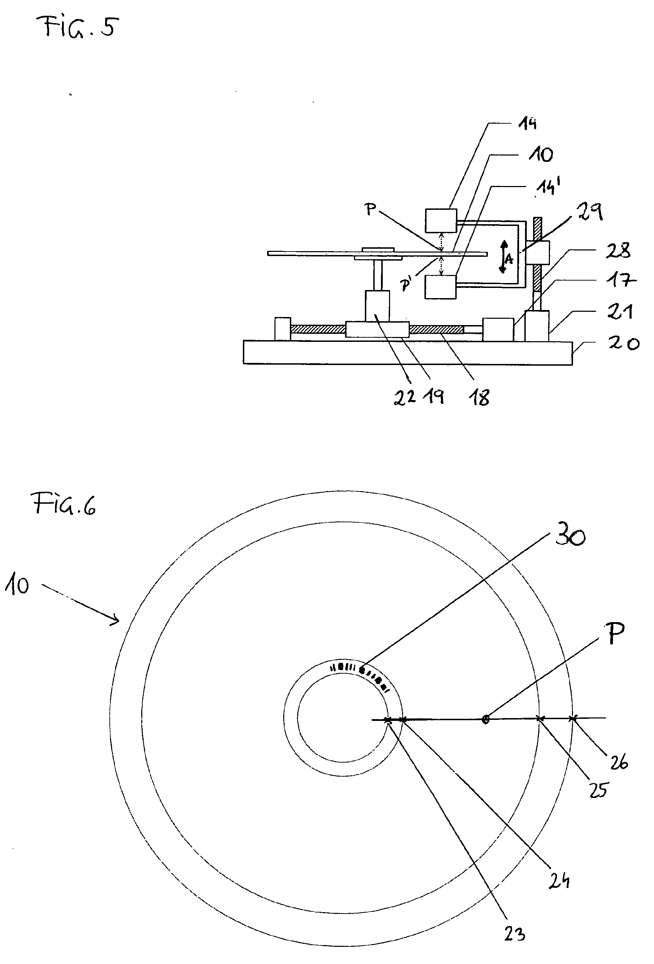

Before further components shown in Fig. 1 will be described, we turn now to Fig. 2: This figure shows that same components as used for detecting the roughness and other parameters on the upper side of the stamper are provided below the stamper. As will be described later in connection with Fig. 5, all the components shown in Fig. 2 can be incorporated into two measurement heads 14, 14', respectively. Therefore, with a single scan, the entire relevant upper and lower surface arrows of the stamper can be scanned.

Another important parameter for a stamper is its thickness and, in particular, the variation of the thickness over the stamper arrow. In order to determine the thickness, a second laser light source 11 is provided on the upper side of the stamper (see Fig. 1 and Fig. 3). This laser light source emits a parallel laser beam of preferably 1 mm in diameter. The laser beam is directed to measuring point P by a mirror 5 and hits the stamper surface under a certain angle. The reflected light beam is focused by two focus lenses 2 onto a position sensitive diode 8. Depending on the vertical position of the measuring point P, the signal of the position sensitive diode 8 will vary.

As can be seen from Fig. 3, the same components are also arranged below the stamper in order to measure the position of the measurement point P'. By knowing the position of the measurement point P, on the one hand (upper detection system), and of the measuring point P' (lower measuring system), the thickness d of the stamper between the two points P and P' can be easily determined.

In order to be able to calibrate the thickness measuring system shown in Fig. 3, it is possible to move both measurement points P and P' onto a sample 13 of well known thickness D.

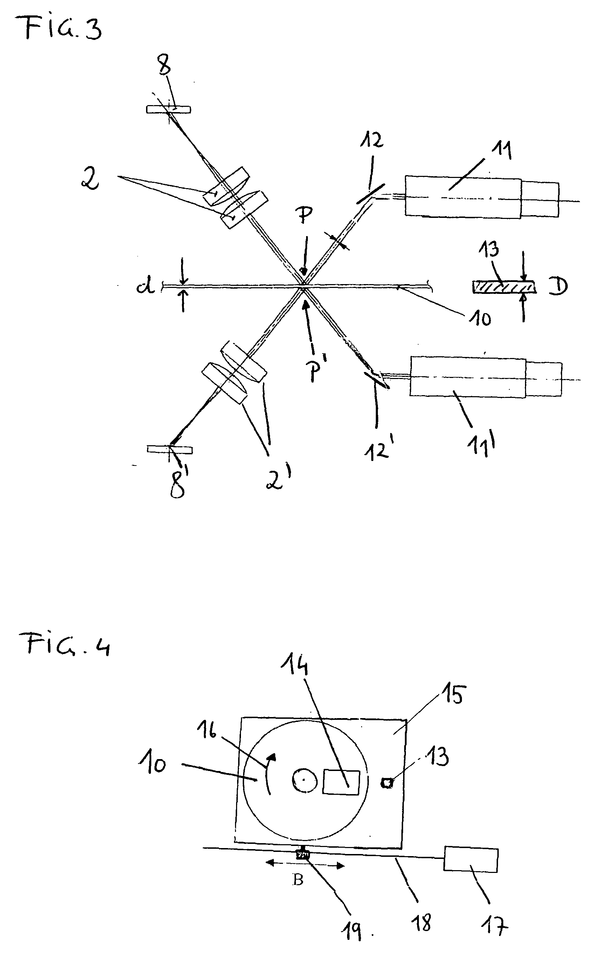

As can be seen from Fig. 4, this sample 13 can be mounted on the turntable sledge 15 close to the stamper 10 itself. In this Fig. 4, the upper measurement head 14 and the motor 17 are located at the fixed position with respect to a housing of the entire device. In order to perform the measurement on the surface of the stamper 10, a motor (not shown) of the turntable sledge 15 starts to turn the stamper in the direction of the rotary arrow 16. The motor 17 turns spindle 18. This causes a linear movement of the spindle nut in direction B. In other words, the stamper is radially moved with respect to the fixed upper measuring head. Of course, it would also be possible to keep the turntable fix and move the measuring head.

By moving the turntable sledge 15 to the far left end of Fig. 4, the measuring head will measure the sample 13 of fixed thickness D, thereby calibrating thickness measurement.

Turning now to the description of Fig. 5, which is a side view on an embodiment similar to that shown in Fig. 4 (but without the calibrating plate 13) having a vertically adjustable head assembly. The motor 17 for the lateral movement of the turntable with its turntable motor 22 is mounted on a base plate 20. On the same plate 20, a motor 21 with a spindle 28 is mounted for vertically moving both measurement heads 14 and 14', which include all components shown in Fig. 1 to Fig. 3. These two measurement heads are mounted on a common support 29 by activating motor 21. Both measurement heads move up and down with respect to the stamper 10 in direction of the double arrow A. With such an arrangement, it is possible to always have a perfect focus of the light beams of the measurement spots P and P' respectively, even if the stamper itself is deformed and, therefore, a little bit higher or lower at the measuring points P and P'.

Also, by a controlled movement of the measurement heads and thereby measuring a known sample, the entire device may be calibrated by taking into account potential non-linearities of this device.

Fig. 6 shows an example of a typical stamper. This stamper also has a barcode for identification purposes on it. A preferred embodiment of the invention can also read this barcode by the same device that also determines the surface properties discussed above.

Furthermore, it is possible to measure relevant radial dimensions of the stamper, for example the inner boarder 23 or the outer boarder 26. So, the inner boarder 24 and the outer boarder 25 of the pit structure can be easily determined. Performing these measurements at several rotation angles of the stamper, it can - for example - easily be determined whether the pit structure circle ring is eccentric with respect to the centre hole.

Of course, the invention is not limited to the examples shown, and it is clear that all embodiments are diagrammatic representations only. It is for example possible to use a single laser for all the measurements by simply splitting the beam. However, the roughness measurement laser 1 and the thickness measurement laser 11 could influence one another - for example the light beam from the thickness measurement laser 11 enhances the stray light reflection component. If this is desired, both lasers may be used at the same time. If this should be avoided, it is also possible to use these lasers 1 and 11 in different time windows - for example by modulating these lasers.

Of course, it is readily apparent to a person skilled in the art that the electrical signals from the sensors (photodiodes) described above, will be processed in an electronic processing unit. Of course, all measurements can be stored in suitable memories and be evaluated and displayed on screens or printed out.

## Claims

1. Device for measuring the thickness (d) of optical media stampers comprising a turntable for rotating the stamper, the measuring device comprising
- at least one light source (1, 1') for emitting a light beam, which is directed onto a surface of the stamper (10),
- position sensitive detector means (8, 8') for detecting the location of the light beam reflected from the stamper (10) surface.

2. Device according to claim 1, wherein the thickness (d) measuring means comprises at least one light source (11, 11'), means (5, 5') for directing a first light beam onto the first surface of the stamper (10) and a second light beam onto the opposite, second surface of the stamper (10), under an oblique angle respectively, and further comprising first and second position sensitive detection means (8, 8'), preferably a position sensitive diode, for detecting and locating the reflected first and second light beams, respectively.

3. Device according to claim 2, wherein the at least one light source (11, 11') is a laser, preferably a semiconductor laser.

4. Device according to claim 2 or 3, wherein the light beam diameter is between 0,5 mm and 1,5 mm, preferably about 1 mm.

5. Device according to any claim of claims 2 to 4, wherein at least one focus lens (2, 2') is provided to focus the first and/or second reflected light beam onto said first and/or second position sensitive detection means (8, 8').

6. Device according to any claim of claims 1 to 5, further comprising a device for measuring surface properties of optical media stampers comprising a turntable for rotating the stamper, the measuring device comprising
- at least one light source (1, 1') for emitting a light beam, which is directed onto a surface of the stamper (10),
- stray light detector means (9, 9') for detecting stray light, which is reflected from the stamper (10) surface under angles differing from the direct reflexion angle of the incident light beam.

7. Device according to claim 6, wherein the incident light beam of the surface measuring device is directed in a substantially perpendicular direction onto the stamper (10) surface, so that the directly reflected light component of the incident light beam is also substantially perpendicular to the stamper (10) surface.

8. Device according to claim 6 or claim 7, wherein an optical element (4, 4') changes the direction the light beam from the light source (1, 1') and directs it onto the stamper (10) surface.

9. Device according to claim 8, wherein the optical element (4, 4') is a mirror.

10. Device according to claim 8 or 9, wherein the optical element (4, 4') collects the directly reflected light component of the incident light beam and has such outer diameters that stray light may pass by the optical element (4, 4') to reach the stray light detector means (9, 9').

11. Device according to claim 10, wherein the optical element (4, 4') collects the directly reflected light component and directs it to a direct light detector means (7, 7').

12. Device according to claim 11, wherein the direct light detector means (7, 7') comprises a position sensitive diode.

13. Device according to any claim of claims 8 to 12, wherein the optical element (4) is arranged between two focus lenses (3, 3').

14. Device according to any claim of claims 6 to 13, wherein the diameters of the light spot of the incident light beam on the stamper surface are between 0,05 mm and 0,5 mm, preferably about 0,2 mm.

15. Device according to any claim of claims 6 to 14, wherein the light spot is a circular area.

16. Device according to any claim of claims 6 to 14, wherein the light spot is of longitudinal shape.

17. Device according to any claim of claims 6 to 16, wherein a beam splitter (6, 6') is arranged in the light beam.

18. Device according to any claim of claims 6 to 17, wherein the light source (1, 1') is a laser, preferably a semiconductor laser.

19. Device according to any claim of claims 6 to 18, comprising first components (1, 3, 4, 6, 7, 9) to measure surface properties of the first side of the stamper (10) and second components (1', 3', 4', 6', 7', 9') to measure at the same time surface properties of the opposite, second side of the stamper (10).

20. Device according to claim 19, wherein the first and second components (1, 3, 4, 6, 7, 9; 1', 3', 4', 6', 7', 9') are identical or similar to each other and arranged in an identical or similar manner with respect to each other.

21. Device according to any claim of claims 6 to 21, wherein the optical and detector components (1, 3, 4, 6, 7, 9; 1', 3', 4', 6', 7', 9') are arranged in a measuring head.

22. Device according to claim 20 and 21, wherein the optical and detector components (1, 3, 4, 6, 7, 9) for measuring the surface properties of the first side of the stamper (10) are arranged in a first measuring head (14), while the optical and detector components (1', 3', 4', 6', 7', 9') for measuring the second side of the stamper are arranged in a second measuring head (14').

23. Device according to claim 22, wherein - on the first side of the stamper (10) - a first part (2, 5, 8, 11, 12) of the optical and detector components for the thickness measuring is arranged in the first measuring head (14), and wherein - on the second side of the stamper (10) - a second part (2', 5', 8', 11', 12') of the optical and detector components for the thickness measuring is arranged in the second measuring head.

24. Device according to claim 22, wherein the first and second measuring head (14, 14') are mounted on a common support (21) which is adjustable in a direction (A) perpendicular to the stamper (10) surface.

25. Device according to claim 24, wherein a motor drive (M, 20) is provided to adjust the position of both measuring heads (14, 14').

26. Device according to any claim of claims 1 to 25, wherein the turntable (15) for rotating the stamper (10), on the one hand, and the optical and detector components (1, 3, 4, 6, 7, 9, 11, 12; 1', 3', 4', 6', 7', 9', 11', 12') of the surface and/or thickness measurements, on the other hand, are movably mounted with respect to each other in a direction (B) parallel to the stamper (10) surface.

27. Device according to claim 26, wherein a drive unit (17, 18, 19) is provided to slidably move the turntable.

28. Device according to claim 26 or 27, wherein the light beam spot (P) moves along the stamper (10) surface in radial direction thereof.

29. Device according to any claim of claims 1 to 28, wherein the turntable comprises at least one reference plate (13) of known thickness (D), the thickness of which can be determined by the thickness measuring means for calibrating same.

30. Device according to any claim of claims 1 to 30, wherein it is adapted to read identification information (30) on the stamper.
